**Europäisches Patentamt**

**European Patent Office**

**Office européen des brevets**

(19)

(11) Publication number : **0 364 453 B1**

(12) # EUROPEAN PATENT SPECIFICATION

(45) Date of publication of patent specification :
**29.04.92 Bulletin 92/18**

(51) Int. Cl.⁵ : **C02F 1/52, B01D 21/08**

(21) Application number : **88902962.5**

(22) Date of filing : **19.02.88**

(86) International application number :
**PCT/SE88/00075**

(87) International publication number :
**WO 89/00150 12.01.89 Gazette 89/02**

(54) **METHOD AND APPARATUS FOR PURIFICATION OF LIQUID MEDIUMS, ESPECIALLY WASTE WATER.**

(30) Priority : **02.07.87 SE 8702737**

(43) Date of publication of application :
**25.04.90 Bulletin 90/17**

(45) Publication of the grant of the patent :
**29.04.92 Bulletin 92/18**

(84) Designated Contracting States :
**BE DE FR GB IT NL SE**

(73) Proprietor : **JÄGSELL, Anders**
**Uttas Väg 32**
**S-310 41 Gullbrandstorp (SE)**

(72) Inventor : **JÄGSELL, Anders**
**Uttas Väg 32**
**S-310 41 Gullbrandstorp (SE)**

(74) Representative : **Avellan-Hultman, Olle**
**Avellan-Hultman Patentbyra AB P.O. Box 5366**
**S-102 46 Stockholm 5 (SE)**

EP 0 364 453 B1

Jouve, 18, rue Saint-Denis, 75001 PARIS

## Description

The present invention relates to a method and an apparatus for chemical purification of contaminated liquids, especially waste water and another liquids from developed areas or industries by means of any known flocculent like lime, aluminum sulphate, ferrous chloride, ferrous sulphate, comprising mixing flocculent chemicals into the water, flocculating the water and precipitation of nutrient salts and all kinds of other contaminations of the water.

More specifically the invention is directed to such a method and such an apparatus by means of which a continuous precipitation of nutrient salts and other substances is made in purification plants and flocculation plants, said apparatus being integral with the purification or flocculation plant or connected to a basin or a similar means for removing precipitations, for instance an available sedimenting basin for waste water or any other liquid.

It is known that some different chemical substances like lime, aluminum sulphate, ferrous chloride, ferrous sulphate are capable of precipitating nutrient salt, biochemically oxygen consuming substances, suspensions and many other liquid soluble and unwanted substances from the water or other liquids.

Aluminum sulphate, ferrous sulphate and ferrous chloride also are well known active flocculents having a known good activity. Lime is a flocculent which is suitable from environemental viewpoint, which raises the pH value of acid and slightly basic solutions and which thereby counteracts the acidification of ground and water. So far it has, however, been difficulties to utilize lime for chemical purification of waste water and other liquids, above all depending on the fact the lime deposits as lime shell on the walls of feeding pipes and flutes in which lime and water or similar means are supplied to the purification basin.

For chemical purification of waste water and other liquids it has therefore been customary to utilize, to a large extent, other flocculents like aluminum sulphate, ferrous chloride and ferrous sulphate, which in previously known methods and apparatus both have operated relatively slowly thereby necessitating large operation volumes, and also can give some negative effects on the water of the recipient, and which further have not always given the intended result. When using said known flocculents it has generally been necessary to provide special flocculation plants or basins connected to the sedimentation basin, and therefore the purification plant as a whole has become relatively expensive to provide and to maintain.

The object of the invention therefore has been to solve the problem of providing a method and an apparatus offering the possibility of effectively utilize any knwon flocculent like lime in slaked or unslaked condition, aluminum sulphate, ferrous chloride, ferrous sulphate etc. for purifying waste water or other liquids, which apparatus is comparatively simple and cheap to build and to install, which can be installed into an integral unit with the ordinary sedimenting basin, whether said basin is round, rectangular or of any other shape, and independently of the size of the entire plant, and in which consequently the steps of admixture of flocculent, the flocculation and the precipitation follow continuously and in one and the same unit. It is thereby also important that the method and the apparatus are formed so that the way of mixing the flocculent with the waste water, the admixture volume and the admixture time can be varied considering various flows of waste water and considering the fact that the flocculation time etc. varies for different actual flocculents. An advantage with the invention is that there is no need to transport the liquid including the flocculent, or the ready flock respectively, between different containers. On the contrary the entire process takes place by a continuous through flow process, in which the admixture of flocculent, the flocculation and the precipitation follow in one and the same unit.

The flocks are very sensitive to disturbances. In conventional flocculation plants, in which the flocks are transported through tubes or flutes to the sedimentation basin there is at least a partly collapsing of the actual flocks, which flock thereafter has to be rebuilt, and this reduces the purification effect to a great extent.

According to the invention the above mentioned objects are solved by a method which is mainly characterized in

– that the liquid to be purified is continuously mixed with the flocculent in a mixing chamber,

– whereby the entering water is kept in a turbulent movement with a downwardly directed activity and of such low intensity as to prevent the flocks from becoming broken, while the liquid is mixed with the flocculent in the mixing chamber,

– in that the mixture of the water and the flocculent is continuously transferred to a flocculation chamber or several flocculation chambers provided in series following each other,

– whereby the stream of the liquid/flocculent mixture flows from the lower part of the mixing chamber into the lower part of the flocculation chamber or the first one of the flocculation chambers,

– and whereby the liquid/flocculent mixture is also maintained in a turbulent movement in the flocculation chamber of chambers, but in this case with a upwardly directed activity, and of such low intensity as to prevent the flocks from becoming broken,

– in that the liquid/flocculent mixture is allowed to remain in the flocculation chamber or chambers for a sufficient period of time for a complete flocculation, whereby the flocculent causes a precipitation of nutrient salts and other constituents of the water, thereby forming flocks of nutrient salts, biochemically oxygen consuming substances and other water soluable impurites of the water,

– whereupon the liquid with the flocks is drained to a sedimentation basin from the upper part of the flocculation chamber or chambers,

– in which sedimentation basin the relatively heavy flocks and other heavy constituents are allowed to sink to the bottom, from which they are removed as known per se, for instance by means of a scraper apparatus, a pump or a similar means.whereas the purified water of the basin is continuously let out.

Thus, in the first place the invention involves a new method and a new apparatus for continuously mix flocculent with the incoming liquid to become purified and to provide a precipitation by a flocculation before the liquid with the flocks are allowed to flow out into the ordinary sedimentation basin. The mixing and flocculation apparatus preferably is mounted in or above the sedimentation basin, and therefore it can be used in available plants, even plants intended to be used with other types of chemical purification than flocculation, and without the need of expanding the plant in the horizontal or the vertical direction and indepently of the shape and size of the available basin, there is a minimum demand for attendance, it gives, as compared with previously known methods, an improved purification, the purification follows more quickly than before, and according to a preferred embodiment thereof it can be adapted to such varying flows which appear from summer to winter and during the winter time respectively. In case lime is used as the flocculent the flocculation follows more quickly than when using many other known focculents, the method is cheaper, the lime flocculated sludge with advantage can used as a fertilized since said sludge includes fertilizing phosphorous, and thanks to the high pH value thereof, and it is further possible to obtain the advantage that the pH value of the water or the liquid of the basin or the recipient is increased, and that both the purified water and the precipitated sludge having said relatively high pH value can be assimilated in the nature together with precipitated nutrient salts.

Further characteristics of the invention will be evident from the following detailed description in which reference will be made to the accompanying drawings. It is to be understood that the embodiments of the method and the apparatus to be described in the following are only of illustrating character, and that many modification and changes may be made within the scope of the appended claims.

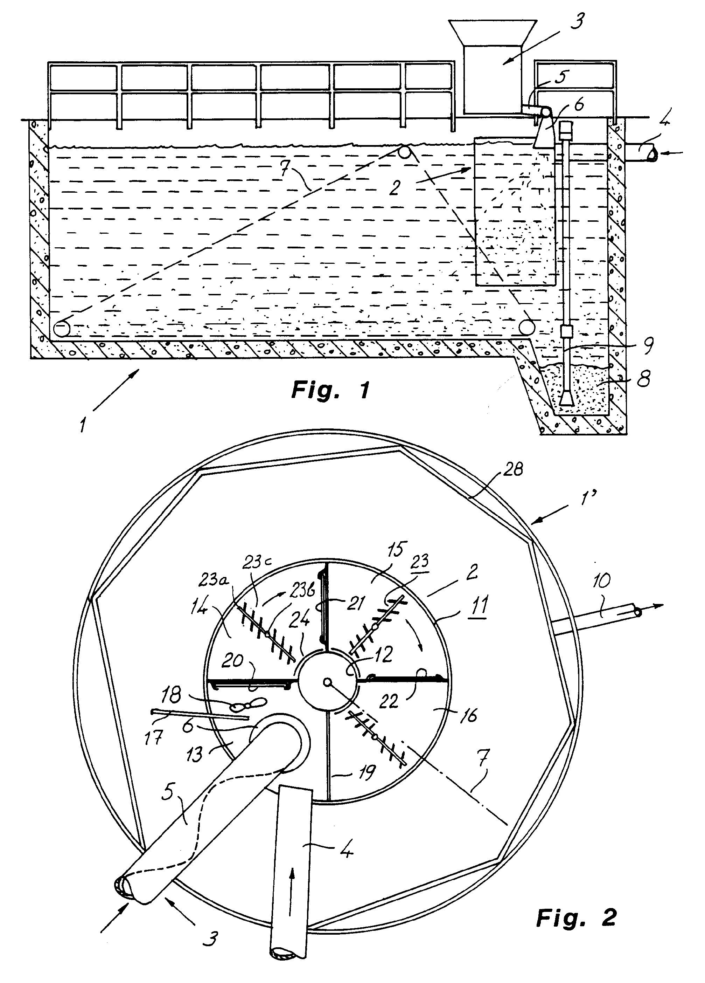

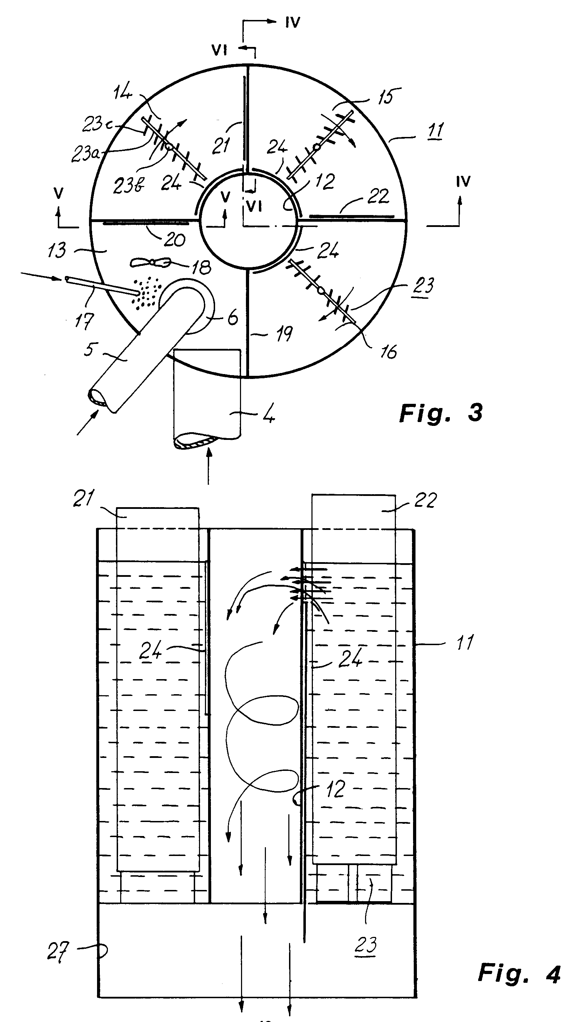

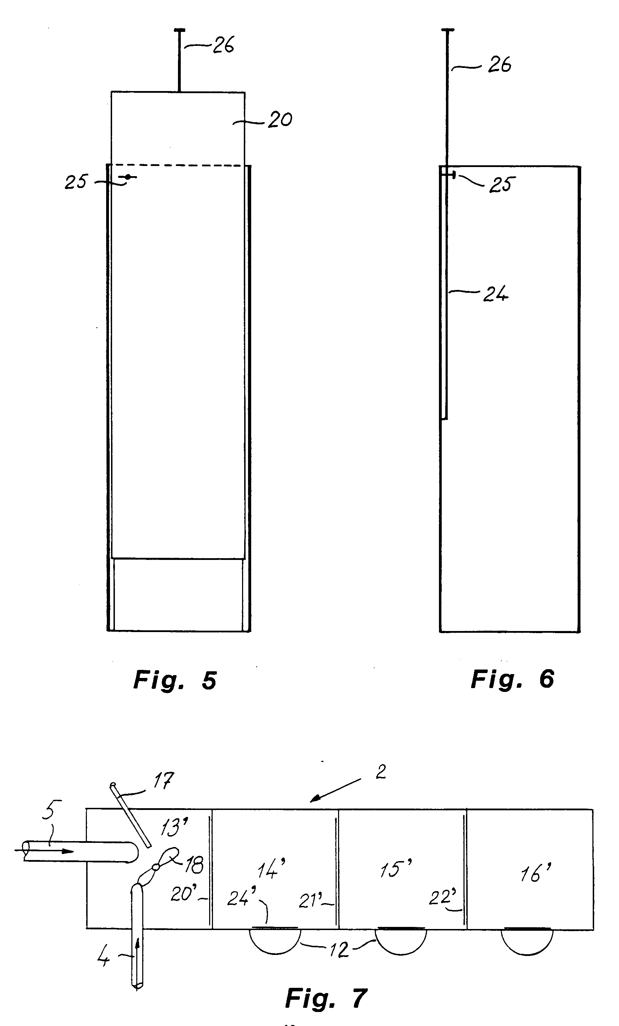

In the drawings figure 1 diagrammatically shows a vertical cross section through a purification plant formed with the apparatus according to the invention for purification by flocculation. Figure 2 is a top plan view of another plant formed in accordance with the invention. Figure 3 is a separate top view of a mixing and flocculation apparatus according to the invention. Figure 4 is a cross section view along lines IV-IV of figure 3, and figures 5 and 6 show cross section views along lines V-V and VI-VI of figure 3 resp. Figure 7, finally, shows an alternative embodiment of a flocculation plant according to the invention.

The plant shows in figure 1 generally comprises a basin 1 having mounted therein a purification apparatus 2 according to the invention including mixing and flocculation units, which purification apparatus is supplied with flocculent from a silo 3 or a similar means. The water or the liquid to be purified is adapted to be supplied through a conduit 4 which is connected to the purification apparatus. The flocculent is supplied for instance via a diagramatically indicated screw feeder 5 to a feeder cone 6 in which the flocculent meets and is mixed with the incoming water.

The basin of figure 1 is of conventional type and at the bottom thereof there is a scraper means 7 for scraping of precipitations and sludge from the water to a collection box 8 from which the sludge and the precipitations can be pumped off by means of a sludge pump 9. The purified water is generally drained by self-draining through an outlet 10 (figure 2) to a suitable place of the recipient.

In figure 2 the purification apparatus according to the invention is shown applied to a circular sedimentation basin 1'. Otherwise the plant is of the same type as in figure 1.

As most clearly shown in connection to figures 2 and 3 the purification apparatus according to the invention comprises a container 11, in the illustrated case a circular-cylindric container, but it may alternatively have a square, rectangular, polygon or any other cross section form. In the illustrated case the container is formed with a central vertical through sedimentation tube 12 and round said tube two or several at least partly closable chambers, as shown in the drawings four chambers 13-16.

The first chamber, into which both the water supply 4 and the flocculent screw open, is a mixing chamber 13 for flocculent and water. The inlet cone 6 is mounted in such position that the bottom edge thereof is located slightly under the water level of the mixing chamber 13 to prevent the flocculent from making a lot of dust and spreading to the ambient. At the interior the cone is formed with water spreaders which continuously spray water to the cone walls to prevent the flocculent from sticking to the walls. For providing an effective mixing of the powder and the water it is important that the water is put into a heavy turbulent movement, and for this purpose the mixing chamber can be formed with one or more air blow bars 17 blowing air into the chamber, or with a propeller 18 mounted at the bottom of the chamber and having a downwardly directed activity. The propeller should be formed and should be driven with such speed that the said heavy turbulent movement is reached.

The volume of the mixing chamber should be calculated considering the flow through the water supply conduit, so that an even through-flow is obtained in the purification plant, and the amount of flocculent should be calculated considering the amount of water and the amount of nutrient salts and other material of the water, or considering the intended pH value, of a combination of the amount of water and the pH value.

For adapting the mixing chamber 13 to different volumes the partition wall between the mixing chamber 13 and the adjacent flocculation chamber 14 can be displacable, so that the volume of the mixing chamber is increased or reduced respectively.

The mixing chamber 13 is defined, along the periphery thereof, by the outer wall of the container 11, at one end thereof by a fixed wall 19 and at the other end by a wall or screen 20 that can be raised or lowered. The screen is intended to let through water mixed with powder to the adjacent flocculation chamber and it should be raised so that a calm and even flow of water mixed with powder is allowed under the screen and into the adjacent chamber 14, in which the mixture is subjected to a flocculation. In case the apparatus is intended to be used for a constant flow of water it may be sufficient with only one flocculation chamber 14, but generally the flow of water varies, for instance in waste water purification plants following the season of the year, and in such cases it is suitable to form the apparatus with two, three or still more flocculation chambers, in the illustrated case three flocculation chambers 14, 15 and 16.

In large purification plants, for instance when unslaked lime is used as the flocculation means the admixture cone 6 can be substitued by a flute for a slurry in which a sufficient amount of flocculent is supplied, and in such case the slurry can be prepared in another container so as to have a suitable consistency and content of powder.

The optimum time for flocculation of nutrient salts and other material of the water is different for diffent flocculents. So, tests have proved that the optimum flocculation time when using lime as a flocculent is between 3 and 12 minutes, for aluminum sulphate, ferrious chloride or ferrous sulphate the flocculation time is about 20 minutes, and the apparatus is calculated in consideration thereof, so that the water remains in the purification apparatus at least that long time. In case of low flows only one flocculation chamber is utilized, in case of heavier flows the volume of two or all three flocculation chambers are used.

Between adjacent flocculation chambers there are screens 21 and 22 which can be raised and lowered respectively, and which upon need can be removed entirely so that the volume of one, two or all three out of the illustrated container segments is/are used for the flocculation.

Depending on the variations in the amount of incoming water appearing in case of melting of snow, during dry summers, autumn rains and during normal load the operator can keep, raise or remove the screens 21 and 22 thereby utilizing a suitable flocculation volume of the purification apparatus. This is such a flocculation volume that the water remains in the purification apparatus an average time of at least the above mentioned mixing and flocculation time for the actual flocculent. It is also possible to divide the apparatus into an optional number of flocculation chambers depending on what stay time is desired for the water/powder mixture. Irrespective of the magnitude of the flocculation volume there can be a spillway outflow of flocked liquid to the sedimentation basin through the sedimentation tube 12 from any wanted chamber.

The flocculation chamber or each flocculation chamber 14-16 may have a stirring means 23 as indicated in figures 2 and 3. Each stirring means can be a propeller but in a preferred embodiment of the invention it is a so called gate stirring means comprising a frame 23a adapted to rotate slowly about a vertical shaft 23b and carrying vertical flies 23c which can be set to an optional angle in relation to the frame. If a maximum stirring is wanted the flies 23c are set parallelly to the frame 23a, if a minimum stirring is wanted the flies 23c are set perpendicularly to the frame 23a. The flies of one and the same frame can be set freely in relation to each other as indicated in figure 2. The rotation of the stirring means 23 of the different flocculation chambers 14-16 can be actuated in common or separately for each gate stirring means and with different speeds and different fly angles in relation to each other.

If one or more propellers are used as stirring means in the flocculation chambers they ought to have an upwardly directed activity. The gate stirring means or the propellers respectively should rotate with such reasonable speed that the flocks already formed in the water are broken apart.

Each one of the flocculation chambers 14-16 is formed with a slide shutter 24 at the sedimentation tube 12 which shutter can be lowered so as to form an overflow edge as indicated at the chamber 16 of figures 4 and 6, whereby waste water together with flocks flow over the shutter 24, down through the sedimentation tube 12 and into the water of the sedimentation basin, in which sludge and flocks sink to the bottom depending on their relatively high weight and from which the sludge and the flocks is scraped together by means of the scraper means and are removed by means of a sludge pump or a similar means. A stop screw 25 or a similar means at the upper part of the chamber forms a stop means for the shutter, and the actuation thereof can be made from above with a handle 26 (see figures 5 and 6).

In order to lead the waste water with the flocks calmly and evenly downwards the container 11 underneath the chambers 13-16 is formed with a guide screen 27 which is most clearly shown in figure 4.

The sludge and the flocks that sink to the bottom of the round or rectangular sedimentation basin are removed by means of a scraper means 7 to a collection box 8 (figure 1), from which the sludge, solid particles and the flocks can be removed as known. Figure 7 shows an alternative apparatus according to the invention, in which three flocculation chambers 14', 15' and 16' are placed on line after each other and after the mixing chamber 13'. In order to allow a draining of flocculated water alternatively from the first, the second and the third chamber each chamber can be formed with sedimentation tube 12' having a closable shutter. Otherwise the chambers are formed like in the previously described circular apparatus.

The apparatus operates as follows:

Waste water or some other liquid flows through the main conduit 4 into the mixing chamber 13, in which the water is subjected to a vigorous stirring or a turbulent movement by means of the air blow bar 17 and/or the propeller 18. At the same time a flocculent is introduced in the mixing chamber 13 from the silo 3 or from an adjacent slurry forming means and is carefully mixed with the water. The amount of flocculent powder supplied to the mixing chamber is, according to experience following a careful analysis of the waste water, calculated so that the amount is adapted to the special circumstances. From the mixing chamber the powder/water mixture flows underneath the screen 20 into the lower part of flocculation chamber 14, in which the stirring means, for instance the gate stirring device rotates and provides a stirring by a slow rotation. The flies of the gate stirring means are trimmed so as to give the best and most indulgent stirring of the entire flocculation unit and so that the final flow of water and flocks through the sedimentation tube gets a whirling like movement. Depending on the amount of incoming water the screens 21 and 22 of the two further flocculation chambers 15 and 16 are set so that the powder/water mixture is allowed to remain in the flocculation volume for a period of time corresponding the flocculation time for actual flocculent. This time is important since, if the time is too short, the flocculation is not completed when the water leaves the purification apparatus, whereas, if the time is too long, there is a risque that the sedimentation starts already inside the purification apparatus. In case of low flows or waste water the screen 21 to the second flocculation chamber 15 is closed whereby both the second and the third flocculation chamber 15 and 16 are out of the process, the shutter 24 of the first flocculation chamber is lowered to a desired level, and the flocked water flows over the upper edge of the shutter and down through the sedimentation tube 12. It is important that the powder/water mixture is kept turbulating during the flocculation process, however the turbulenting movement must not be so vigorous that the ready, sensitive, flock is broken apart. By the action of the gate stirring means 23 the water of the flocculation chamber gets a rotating movement which is propagated as a laminary screw formed water flow down through the sedimentation tube. The flocked water thereby enters the basin 1 with such reasonable speed that the flocks are not broken apart. It may be said that the sedimentation starts already inside the sedimentation tube.

The waste water with the precipitated flocks then leaves via the sedimentation tube 12 to the sedimentation basin flowing over the shutter 24 of one of the flocculation chambers - if one, two or all three flocculation chambers are utilized at the moment.

## Claims

1. Method for chemical purification of waste water and another liquids by means of any known flocculent like lime, aluminum sulphate, ferrous chloride, ferrous sulphate **characterized** in
- that the liquid to be purified is continuously mixed with the flocculent in a mixing chamber (13),
- whereby the entering water (4) is kept in a turbulent movement with a downwardly directed activity (17, 18) and of such low intensity as to prevent the flocks from becoming broken, while the liquid is mixed with the flocculent in the mixing chamber (13),
- in that the mixture of the water and the flocculent is continuously transferred to a flocculation chamber or several flocculation chambers (14-16) provided in series following each other,
- whereby the stream of the liquid/flocculent mixture flows from the lower part of the mixing chamber (13) into the lower part of the flocculation chamber or the first one of the flocculation chambers (14-16),
- and whereby the liquid/flocculent mixture is also maintained in a turbulent movement in the flocculation chamber of chambers (14-16), but in this case with a upwardly directed activity, and of such low intensity as to prevent the flocks from becoming broken,
- in that the liquid/flocculent mixture is allowed to remain in the flocculation chamber or chambers (14-16) for a sufficient period of time for a complete flocculation, whereby the flocculent causes a precipitation of nutrient salts and other constituents of the water, thereby forming flocks of nutrient salts, biochemically oxygen consuming substances and other water soluable impurites of the water,
- whereupon the liquid with the flocks is drained to a sedimentation basin (1) from the upper part of the flocculation chamber or chambers (14-16),
– in which sedimentation basin (1) the relatively heavy flocks and other heavy constituents are allowed to sink to the bottom, from which they are removed as known per se, whereas the purified water of the basin (1) is continuously let out.

2. Method according to claim 1, **characterized** in that the volume of the flocculation chamber or chambers (14-16), and thereby also the volume of the water/flocculent mixture is, in each situation, controlled so that a calm total percolation of water or another liquid is obtained in the purification apparatus.

3. Method according to claim 2, **characterized** in that the volume of the liquid/flocculent mixture is controlled by closing and opening respectively of a variable number of slide shutters (20) between the communicating flocculation chambers (14-16), whereby the variation of the residence time of the waste liquid in the mixing and flocculation chambers is made by closing against the bottom of the slide shutters (20; 21, 22) between the mixing chamber (13) and the flocculation chamber (14) or chambers (14-16) or between the respective flocculation chambers and between the flocculation chambers (14-16) and the sedimentation basin (1), or by opening said shutters from said bottom or bottoms, respectively.

4. Method according to claim 3, **characterized** in that the control of the shutters is made so that the liquid/flocculent mixture is allowed to stay in the purification apparatus for a sufficient period of time for a complete flocculation, for instance for a period of time of between 3 and 12 minutes when using lime as a flocculent and for about 20 minutes when using aluminum sulphate, ferrous chloride and ferrous sulphate as a flocculent.

5. Apparatus for executing the method according to any of the preceding claims for chemical purification of waste water or another liquid by means of a known flocculent like lime, aluminum sulphate, ferrous chloride, ferrous sulphate **characterized** in that
– the apparatus is a purification apparatus (2) which is directly connected to a specially provided or an available sedimentation basin (1) for waste water or another liquid,
– and which comprises a mixing part (13) which is supplied both with water or another liquid (by 4) and with a flocculent (by 5),
– and which mixing part (13) is formed with means for maintaining the liquid/flocculent mixture in a turbulent movement having a downwardly directed activity,
– and a flocculation part (14-16) directly communicating at the bottom part thereof with the mixing part (13) and formed with a flocculation chamber (14), or with several flocculation chambers (14-16) provided in series and communicating with each other at the bottom parts thereof,
– which flocculation chamber or chambers (14-16) is/are formed with means (23) for maintaining the liquid/flocculent mixture in a turbulent movement having an upwardly directed activity,
– and with means (20) for bringing the liquid/flocculent mixture to stay in the flocculation part (14-16) for a predetermined period of time,
– and whereby the flocculation part (14-16) is directly connected to the sedimentation basin (1) for waste liquid.

6. Apparatus according to claim 5, **characterized** in that the mixing part comprises a mixing chamber (13) formed with a propeller (18) having a downwardly directed activity, or with an air blow bar (17) having an upwardly directed activity, and in that the mixing chamber communicates with the flocculation chamber (14) or the first one of the flocculation chambers via a slide shutter (20) at the bottom part thereof, which shutter can be raised a suitable distance so as to allow a continuous flow of the liquid/flocculent mixture from the mixing chamber (13), underneath the slide shutter (20) and into the bottom of the flocculation chamber or chambers (14-16).

7. Apparatus according to claim 5 or 6, **characterized** in that the flocculation part (14-16) communicates with the sedimentation basin (1) via a slide shutter (24) at the top part thereof, which shutter can be lowered by a suitable distance so that waste liquid with flocks flows in an even, preferably a whirling, movement over the shutter (24), through a sedimentation tube (12) and down into the sedimentation basin (1).

8. Apparatus according to claim 6 or 7, **characterized** in that the flocculation part is split into two or several flocculation chambers provided in series (14-16) having intermediate partition shutters (21, 22) each of which, from a closed position, can separately be raised by an optional distance to form a bottom slot of desired size into the succeeding flocculation chamber (14; 15) or can be removed completely, whereby the volume of the flocculation part (14-16) can be adapted to any variations of the flow of incoming liquid, and especially so that the liquid is allowed to remain in the purification apparatus for such an exactly predetermined period of time that there is a complete flocculation of the liquid before the liquid with the flocks flows down into the sedimentation basin (1).

9. Apparatus according to claim 5, **characterized** in that the floccultion chamber or chambers (14-16) is/are formed with a stirring means comprising a so called gate stirring means which is rotatable with a variable speed about a vertical shaft (23b), and which is formed with several vertical, adjustable flies (23c) by means of which the stirring function and the stirring strength can be varied.

10. Apparatus according to claim 5, **characterized** in that the flocculation chamber or chambers (14-16) is/are formed with a stirring means comprising a propeller which is mounted at the bottom of the chamber and which has an upwardly directed activity.

**Patentansprüche**

1. Verfahren zum chemischen Reinigen von Abwasser und anderen Flüssigkeiten mittels irgendeines bekannten Flockungsmittels, wie Kalk, Aluminiumsulfat, Eisendichlorid, Eisensulfat, **dadurch gekennzeichnet,**

– daß die zu reinigende Flüssigkeit mit dem Flockungsmittel in einer Mischkammer (13) kontinuierlich gemischt wird,

– wobei das eintretende Wasser (4) in einer turbulenten Bewegung gehalten wird, die eine nach unten gerichtete Komponente (17, 18) aufweist und von so geringer Intensität ist, daß die Flocken nicht gebrochen werden, während die Flüssigkeit mit dem Flockungsmittel in der Mischkammer (13) gemischt wird,

– daß die Mischung aus Wasser und Flockungsmittel kontinuierlich in eine Flockungskammer oder in mehrere, in Reihe hintereinander angeordnete Flockungskammern (14 bis 16) transferiert wird,

– wobei der Strom der Flüssigkeits-Flockungsmittel-Mischung aus dem unteren Teil der Mischkammer (13) in den unteren Teil der Flockungskammer bzw. der ersten der Flockungskammern (14 bis 16) strömt,

– und wobei die Flüssigkeits-Flockungsmittel-Mischung auch in der Flockungskammer bzw. den -kammern (14 bis 16) in einer turbulenten Bewegung gehalten wird, die in diesem Fall jedoch eine nach oben gerichtete Komponente aufweist und die von so geringer Intensität ist, daß die Flocken nicht gebrochen werden,

– und daß die Flüssigkeits-Flockungsmittel-Mischung in der Flockungskammer bzw. den -kammern (14 bis 16) während einer für eine vollständige Ausflockung ausreichenden Zeitspanne verbleiben kann, wobei das Flockungsmittel ein Ausfällen von Nährsalzen und anderen Wasserbestandteilen bewirkt und dabei Flocken von Nährsalzen, auf biochemischem Wege Sauerstoff verbrauchenden Substanzen und anderen wasserlöslichen Verunreinigungen des Wassers bildet,

– woraufhin die Flüssigkeit mit den Flocken aus dem oberen Teil der Flockungskammer bzw. den -kammern (14 bis 16) in ein Sedimentationsbecken (1) abgezogen wird,

– wobei die relativ schweren Flocken und andere schwere Bestandteile im Sedimentationsbecken (1) auf den Boden sinken können, von wo aus sie, wie an sich bekannt, entfernt werden, während das gereinigte Wasser des Beckens (1) kontinuierlich abgelassen wird.

2. Verfahren nach Anspruch 1, dadurch gekennzeichnet, daß das Volumen der Flockungskammer bzw. der -kammern (14 bis 16) und dadurch auch das Volumen der Wasser-Flockungsmittel-Mischung zu jedem Zeitpunkt so gesteuert wird, daß in der Reinigungsvorrichtung eine ruhige, vollständige Perkolation von Wasser oder einer anderen Flüssigkeit erzielt wird.

3. Verfahren nach Anspruch 2, dadurch gekennzeichnet, daß das Volumen der Flüssigkeits-Flockungsmittel-Mischung gesteuert wird durch Schließen oder Öffnen einer variablen Anzahl von Gleitverschlüssen (20) zwischen den in Verbindung stehenden Flockungskammern (14 bis 16), wobei die Aufenthaltszeit des Abwassers in den Misch- und Flockungskammern variiert wird, indem die Gleitverschlüsse (20; 21, 22) zwischen der Mischkammer (13) und der Flockungskammer (14) bzw. den -kammern (14 bis 16) oder zwischen den jeweiligen Flockungskammern und zwischen letzteren und dem Sedimentationsbecken (1) gegen den Boden geschlossen werden oder in dem die Verschlüsse gegenüber dem Boden bzw. den Böden geöffnet werden.

4. Verfahren nach Anspruch 3, dadurch gekennzeichnet, daß die Verschlüsse derart gesteuert werden, daß die Flüssigkeits-Flockungsmittel-Mischung während einer für eine vollständige Ausflockung ausreichenden Zeitspanne in der Reinigungsvorrichtung verbleiben kann, beispielsweise während einer Zeitspanne von 3 bis 12 min, wenn Kalk als Flockungsmittel verwendet wird, oder von etwa 20 min, wenn Aluminiumsulfat, Eisendichlorid und Eisensulfat als Flockungsmittel verwendet werden.

5. Vorrichtung zum Durchführen des Verfahrens nach einem der vorhergehenden Ansprüche zum chemischen Reinigen von Abwasser oder einer anderen Flüssigkeit mit Hilfe eines bekannten Flockungsmittels, wie Kalk, Aluminiumsulfat, Eisendichlorid, Eisensulfat, dadurch gekennzeichnet, daß

– die Vorrichtung eine Reinigungsvorrichtung (2) ist, die direkt mit einem speziell vorgesehenen oder zur Verfügung stehenden Sedimentationsbecken (1) für Abwasser oder eine andere Flüssigkeit verbunden ist,

– und die einen Mischteil (13) umfaßt, welcher sowohl mit Wasser oder einer anderen Flüssigkeit (durch 4) als auch mit einem Flockungsmittel (durch 5) versorgt wird,

– und wobei der Mischteil (13) mit Mitteln versehen ist, die die Flüssigkeits-Flockungsmittel-Mischung in einer turbulenten Bewegung hält, welche eine nach unten gerichtete Komponente aufweist,

– und wobei ein Flockungsteil (14 bis 16) an seinem Boden direkt mit dem Mischteil (13) in Verbindung steht und eine Flockungskammer (14) aufweist, bzw. mehrere Flockungskammern (14 bis 16), die in Reihe angeordnet sind und an ihren Böden miteinander in Verbindung stehen,

– wobei die Flockungskammer bzw. die -kammern (14 bis 16) mit Mitteln (23) versehen ist-/sind, die die Flüssigkeits-Flockungsmittel-Mischung in einer turbulenten Bewegung halten, die eine nach oben gerichtete Komponente aufweist,

– und mit Mitteln (20), die die Flüssigkeits-Flockungsmittel-Mischung im Flockungsteil (14 bis 16) für eine vorbestimmte Zeitspanne verweilen lassen,

– und wobei der Flockungsteil (14 bis 16) direkt mit dem Sedimentationsbecken (1) für Abwasser verbunden ist.

6. Vorrichtung nach Anspruch 5, dadurch gekennzeichnet, daß der Mischteil eine Mischkammer (13) umfaßt, die mit einem Propeller (18) versehen ist, der eine nach unten gerichtete Wirkkomponente aufweist, oder mit einer Luftblasstange (17), die eine nach oben gerichtete Wirkkomponente aufweist, und daß die Mischkammer an ihrem Boden mit der Flockungskammer (14) bzw. der ersten der Flockungskammern über einen Gleitverschluß (20) in Verbindung steht, welcher um eine geeignete Strecke angehoben werden kann, um eine kontinuierliche Strömung der Flüssigkeits-Flockungsmittel-Mischung aus der Mischkammer (13) unter dem Gleitverschluß (20) hindurch in den unteren Bereich der Flockungskammer bzw. der -kammern (14 bis 16) zuzulassen.

7. Vorrichtung nach Anspruch 5 oder 6, dadurch gekennzeichnet, daß der Flockungsteil (14 bis 16) in seinem oberen Bereich mit dem Sedimentationsbeckeri (1) über einen Gleitverschluß (24) in Verbindung steht, der um eine geeignete Strecke abgesenkt werden kann, so daß Flocken enthaltendes Abwasser in gleichmäßiger, vorzugsweise verwirbelter Bewegung über den Verschluß (24) durch ein Sedimentationsrohr (12) nach unten in das Sedimentationsbecken (1) fließt.

8. Vorrichtung nach Anspruch 6 oder 7, dadurch gekennzeichnet, daß der Flockungsteil in zwei oder eine Mehrzahl von in Reihe angeordneten Flockungskammern (14 bis 16) unterteilt ist, die dazwischenliegende Trennverschlüsse (21, 22) aufweisen, von denen jeder aus einer Schließstellung heraus gesondert um einen beliebigen Abstand zur Bildung eines in die nachfolgende Flockungskammer (14; 15) führenden Bodenschlitzes vorgewählter Größe angehoben oder vollständig entfernt werden kann, wodurch das Volumen des Flockungsteil (14 bis 16) an jegliche Strömungsänderungen der eintretenden Flüssigkeit angepaßt werden kann, und insbesondere derart, daß die Flüssigkeit in der Reinigungsvorrichtung für eine exakt vorbestimmte Zeitspanne verbleiben kann, in der es zu einer vollständigen Ausflockung der Flüssigkeit kommt, bevor die Flüssigkeit mit den Flocken nach unten in das Sedimentationsbecken (1) strömt.

9. Vorrichtung nach Anspruch 5, dadurch gekennzeichnet, daß die Flockungskammer oder die -kammern (14 bis 16) mit Rührmitteln versehen ist-/sind, die eine sog. Gatter-Rühreinrichtung umfassen, welche mit variabler Drehzähl um eine vertikale Welle (23b) drehbar und mit mehreren vertikalen, einstellbaren Flügeln (23c) versehen ist, mittels derer die Rührfunktion und die Rührstärke variierbar sind.

10. Vorrichtung nach Anspruch 5, dadurch gekennzeichnet, daß die Flockungskammer bzw. die -kammern (14 bis 16) mit Rührmitteln versehen ist-/sind, die einen Propeller umfassen, der am Boden der Kammer montiert ist und eine nach oben gerichtete Wirkkomponente aufweist.

## Revendications

1. Procédé de purification chimique d'eau usée et d'autres liquides à l'aide d'un floculant connu quelconque tel que la chaux, le sulfate d'aluminium, le chlorure ferreux et le sulfate ferreux, caractérisé en ce que :

– le liquide à purifier est continuellement mélangé avec le floculant dans une chambre de mélange (13),

– de sorte que l'eau admise (4) est maintenue en un mouvement turbulent ayant une activité dirigée vers le bas (17,18) et d'une intensité aussi faible qu'elle empêche les flocs de se briser pendant que le liquide est mélangé avec le floculant dans la chambre de mélange (13);

– en ce que le mélange d'eau et du floculant est continuellement transféré dans une ou plusieurs chambre(s) de floculation (14-16) disposées en série les unes à la suite des autres,

– de sorte que le courant du mélange liquide/floculant s'écoule depuis la partie inférieure de la chambre de mélange (13) dans la partie inférieure de la chambre de floculation ou de la première des chambres de floculations (14-16),

– et de sorte que le mélange liquide/floculant est également maintenu en mouvement turbulent dans la ou les chambre(s) de floculation (14-16), mais dans ce ras avec une activité dirigée vers le haut et d'une intensité suffisamment faible pour empêcher la rupture des flocs ;

– en ce que le mélange liquide/floculant est autorisé à rester dans la ou les chambres de floculation (14-16) pendant une durée suffisante pour une floculation complète, de sorte que la floculation provoque la précipitation de sels nutritifs et d'autres constituants de l'eau, en formant ainsi des flocs de sels nutritifs, des substances qui consomment de l'oxygène par voie biochimique et d'autres impuretés hydrosolubles de l'eau,

– de sorte que le liquide avec les flocs est vidangé dans un bassin de sédimentation (1) depuis la partie supérieure de la ou des chambres de floculation (14-16),

– et en ce que dans le bassin de sédimentation (1), les flocs relativement lourds et d'autres constituants lourds sont autorisés à s'enfoncer sur le fond, d'où on les soutire par des moyens connus, de sorte que l'eau purifiée dans le bassin (1) est continuellement libérée.

2. Procédé selon la revendication 1, caractérisé en ce que le volume de la ou des chambre(s) de floculation (14-16) et ainsi le volume du mélange d'eau et de floculant sont dans chaque ras réglés de manière à obtenir une percolation totale calme de l'eau ou d'un autre liquide dans l'appareil de purification.

3. Procédé selon la revendication 2, caractérisé en ce que le volume du mélange du liquide et du floculant est réglé par fermeture et ouverture respectivement d'un nombre variable de volets coulissants (20) entre les chambres de floculation communicantes (14-16), de sorte que la variation de la durée de séjour du liquide usé dans les chambres de mélange et de floculation est assurée par fermeture contre le fond des volets coulissants (20,21,22) entre la chambre de mélange (13) et la chambre de floculation (14) ou les chambres de floculation (14-16) ou entre les chambres respectives de floculation et entre les chambres de floculation (14-16) et le bassin de sédimentation (1) ou en ouvrant lesdits volets à partir du ou des fonds, respectivement.

4. Procédé selon la revendication 3, caractérisé en ce qu'on effectue le réglage des volets de façon que le mélange liquide/floculant soit autorisé à rester dans l'appareil de purification pendant une durée suffisante pour assurer une floculation complète, par exemple une durée comprise entre 3 et 12 minutes quand le floculant est la chaux et une durée d'environ 20 minutes quand le floculant est le sulfate d'aluminium, le chlorure ferreux ou le sulfate ferreux.

5. Appareil pour la mise en oeuvre du procédé selon l'une quelconque des revendications précédentes, en vue d'une purification chimique d'eaux usées ou d'autres Iquides à l'aide d'un floculant connu tel que la chaux, le sulfate d'aluminium, le chlorure ferreux et le sulfate ferreux, caractérisé en ce que :

– l'appareil est un appareil de purification 2 (directement relié à un bassin de sédimentation (1) déjà en place ou disponible pour les eaux de rebut ou d'autres liquides,

– et qui comprend une section de mélange (13) alimentée en eau ou un autre liquide (4) et en floculant (5),

– cette section de mélange (13) comporte des moyens pour maintenir le mélange liquide/floculant en un mouvement turbulent dont l'acctivité et dirigée vers le bas,

– et une section de floculation (14-16) en communication directe par sa partie inférieure avec la section de mélange (13) et comportant une chambre de floculation (14) ou plusieurs chambres de floculation (14-16) montées en série et en communication les unes avec les autres par leurs parties inférieures,

– la ou les chambre(s) de floculation (14-16) est (ou sont) munie(s) de moyens (23) pour maintenir le mélange liquide/floculant en mouvement turbulent dont l'activité est dirigée vers le haut, et comportant des moyens (20) pour obliger le mélange liquide/floculant à demeurer dans la section de floculation (14-16) pendant une durée prédéterminée,

– et la section de floculation (14-16) est donc directement reliée au bassin de sédimentation pour le liquide usé.

6. Appareil selon la revendication 5, caractérisé en ce que la section de mélange comprend une chambre de mélange (13) comportant une hélice (18) ayant une activité dirigée vers le bas ou une barre de soufflage d'air (17) ayant une activité orientée vers le haut ; et en ce que la chambre de mélange communique avec la chambre de floculation (14) ou la première des chambres de floculation par un volet coulissant (20) dans sa partie inférieure, volet qu'on peut lever d'une distance appropriée pour permettre un écoulement continu du mélange liquide/floculant depuis la chambre de mélange (13), sous le volet coulissant (20) et dans le fond de la ou des chambre(s) de floculation (14-16).

7. Appareil selon la revendication 5 ou 6, caractérisé en ce que la partie de floculation (14-16) communique avec le bassin de sédimentation (1) par un volet coulissant dans sa partie supérieure, volet qu'on peut abaisser sur une distance appropriée de sorte que le liquide usé avec les flocs s'écoule en un mouvement régulier, de préférence tourbillonnaire, sur le volet (24), à travers un tube de sédimentation (12) et vers le bas dans le bassin de sédimentation (1).

8. Appareil selon la revendication 6 ou 7, caractérisé en ce que la section de floculation est divisée en deux ou plusieurs chambres de floculation montées en série (14-16) comportant des volets intermédiaires de cloisonnement (21,22) dont chacun, à partir d'une position fermée, peut être séparément levé sur une distance facultative pour définir une fente inférieure de taille désirée débouchant dans la chambre suivante de floculation (14;15) ou qu'on peut enlever complètement, de sorte que le volume de la section de floculation (14,16) peut être adapté à des variations quelconques du débit du liquide admis et surtout de sorte que le liquide est autorisé à demeurer dans l'appareil de purification pendant une période prédéterminée avec exactitude assurant une floculation complète du liquide avant que le liquide, avec les flocs s'écoule vers le bas dans le bassin de sédimentation (1).

9. Appareil selon la revendication 5, caractérisé' en ce que la ou les chambre(s) de floculation (14-16) est (ou sont) formé(es) avec des moyens agitateurs comprenant ce qu'on appelle un agitateur à porte qui est rotatif à une vitesse variable autour d'un arbre vertical 23b et comportant une série d'ailettes verticales réglables 23c à l'aide desquelles on peut varier la fonction d'agitation et l'intensité d'agitation.

10. Appareil selon la revendication 5, caractérisé en ce que la (ou les) chambre(s) de floculation (14-16) est (ou sont) formé(es) avec un moyen agitateur comprenant une hélice montée dans le bas de la chambre et ayant une activité dirigée vers le haut.

**Fig. 1**

**Fig. 2**

Fig. 3

Fig. 4

**Fig. 5**

**Fig. 6**

**Fig. 7**

13